# EUROPEAN PATENT APPLICATION

(11) **EP 4 678 398 A1**
(43) Date of publication of application: **14.01.2026**
(21) Application number: 24770786.2
(22) Date of filing: 08.03.2024
(51) Int. Cl.: B32B 27/32, B29C 55/06, B65D 65/40

(54) **MULTILAYER STRETCHED FILM**

(30) Priority: 10.03.2023 JP 2023038043
(71) Applicant: Prime Polymer Co., Ltd., Tokyo 104-0028 (JP)
(72) Inventor: SEKIYA Keiko, Ichihara-shi, Chiba 299-0108 (JP); SAITO Tetsuya, Ichihara-shi, Chiba 299-0108 (JP); YOSHIDOME Ken, Ichihara-shi, Chiba 299-0108 (JP)
(74) Representative: J A Kemp LLP
(86) International application number: PCT/JP2024/009083
(87) International publication number: WO 2024/190680

(57) **Abstract**

Provided is a multilayer stretched film having an excellent balance of gloss, stiffness, vertical tear strength and sagging, and excellent recyclability. The multilayer stretched film is obtained by combining five layers made from ethylene-based polymers that are different in melt flow rate and density. Also provided is a laminate in which a multilayer stretched film used as a substrate, and for example, other plastic films, metal foils such as an aluminum foil, paper, and cellophane are laminated.

## Description

### Technical Field

The present invention relates to a multilayer stretched film, and more specifically to a multilayer stretched film having excellent recyclability, and excellent gloss, stiffness and strength with a good balance.

### Background Art

Films made from various resins are used as substrates for packaging materials, and characteristics necessary for ALL PE films include excellent gloss, stiffness and strength.

High-density polyethylene (HDPE) is suitable as the resin from the viewpoint of stiffness, but may be poor in vertical tear strength.

### Summary of Invention

### Technical Problem

If HDPE having a low melt flow rate (MFR) (low-MFR HDPE) is used for increasing the vertical tear strength, gloss may become insufficient. If the density of a film used as a substrate is high, sagging may occur, leading to a poor appearance.

The present invention has been made to address these problems, and is based on the findings that a film with multiple layers different in MFR (high-MFR HDPE layer/low-MFR HDPE layer), which is also provided with layers with a lower density to make the overall density (average density) low, gives a multilayer stretched film having an excellent balance of gloss, stiffness, vertical tear strength and sagging, which also has excellent recyclability.

### Solution to Problem

The subject matter of the present invention is as follows.

[1] A multilayer stretched film comprising, in the following order,
   a layer (a1) containing, as a main component, an ethylene-based polymer (A1) having a melt flow rate (MFR, 190°C, 2.16 kg load) of 0.5 g/10 min or more and 10 g/10 min or less as measured according to JIS K 7210, and a density of 940 kg/m³ or more as measured according to JIS K7112,
   a layer (a2) containing, as a main component, an ethylene-based polymer (A2) having a melt flow rate (MFR, 190°C, 2.16 kg load) of 0.01 g/10 min or more and less than 0.5 g/10 min as measured according to JIS K 7210, and a density of 940 kg/m³ or more as measured according to JIS K7112,
   a layer (b) containing, as a main component, an ethylene-based polymer (B) having a melt flow rate (MFR, 190°C, 2.16 kg load) of 0.01 g/10 min or more and less than 50 g/10 min as measured according to JIS K 7210, and a density of lower than 940 kg/m³ as measured according to JIS K7112,
   a layer (a3) containing, as a main component, an ethylene-based polymer (A3) having a melt flow rate (MFR, 190°C, 2.16 kg load) of 0.01 g/10 min or more and less than 0.5 g/10 min as measured according to JIS K 7210, and a density of 940 kg/m³ or more as measured according to JIS K7112, and
   a layer (a4) containing, as a main component, an ethylene-based polymer (A4) having a melt flow rate (MFR, 190°C, 2.16 kg load) of 0.5 g/10 min or more and 10 g/10 min or less as measured according to JIS K 7210, and a density of 940 kg/m³ or more as measured according to JIS K7112, wherein an average density is 931 kg/m³ or more and 948 kg/m³ or less.
[2] The multilayer stretched film according to [1], which has a stretch ratio of 2 or more.
[3] The multilayer stretched film according to [1] or [2], which has a thickness of 5 µm to 1,000 µm.
[4] The multilayer stretched film according to any one of [1] to [3], which has a glossiness of 30% or more, an elastic modulus (machine direction) of 2,000 MP or more, and a tear strength (machine direction) of more than 0.5 N.
[5] A laminate comprising a multilayer stretched film according to any one of [1] to [4].
[6] A packaging material comprising the laminate according to [5].
[7] A method for producing the multilayer stretched film according to any one of [1] to [4], comprising performing stretching during or after formation of an original film by melt coextrusion molding.

### Advantageous Effects of Invention

According to the present invention, a multilayer stretched film having an excellent balance of gloss, stiffness, vertical tear strength and sagging, and excellent recyclability can be obtained.

### Description of Embodiment

Hereafter, a multilayer stretched film of the present invention will be described in more detail.

The multilayer stretched film of the present invention comprises at least the following five layers in the following order:
a layer (a1) containing an ethylene-based polymer (A1) as a main component,
a layer (a2) containing an ethylene-based polymer (A2) as a main component,
a layer (b) containing an ethylene-based polymer (B) as a main component,
a layer (a3) containing an ethylene-based polymer (A3) as a main component, and
a layer (a4) containing an ethylene-based polymer (A4) as a main component.

### Ethylene-based polymer

The ethylene-based polymers used for the respective layers all contain ethylene as a main component, and examples thereof include homopolymers of ethylene, and copolymers of ethylene and an α-olefin having 3 to 20 carbon atoms.

Examples of the α-olefin having 3 to 20 carbon atoms include propylene, 1-butene, 1-pentene, 1-hexene, 1-heptene, 1-octene, 1-nonene, 1-decene, 1-dodecene, 4-methyl-1-pentene, and 4-methyl-1-hexene. A mixture thereof may be used. The α-olefin is preferably a compound having 4, 6 or 8 carbon atoms, or a mixture thereof, such as 1-butene, 1-hexene, 1 octene, or a mixture thereof.

In any of the layers, where the ethylene-based polymer is a copolymer of ethylene and an α-olefin having 3 to 20 carbon atoms, it is desirable that the content of the α-olefin be selected within a range of typically 30 mol% or less, preferably 20 mol% or less, and more preferably 15 mol% or less. Such a range ensures that the relevant layer has good flexibility and heat resistance.

For the ethylene-based polymer for use in the present invention, the method for polymerizing ethylene or a monomer containing ethylene is not particularly limited, and may be a heretofore known method. The polymerization temperature and the polymerization pressure are appropriately adjusted according to a polymerization method and a polymerization apparatus. The polymerization apparatus is not particularly limited. A heretofore known apparatus may be used.

The polymerization method can be appropriately selected according to types of intended ethylene-based polymers, for example, high-density polyethylene (HDPE), medium-density polyethylene (MDPE), low-density polyethylene (LDPE) and linear low-density polyethylene (LLDPE) differing in density and branching.

For example, a multi-site catalyst such as a Ziegler catalyst or a Phillips catalyst, or a single-site catalyst such as a metallocene-based catalyst is used as a polymerization catalyst, and any process selected from gas-phase polymerization, slurry polymerization, solution polymerization and high-pressure ion polymerization is carried out in a single stage, or multiple stages including two or more stages.

When a multi-site catalyst such as a Ziegler catalyst or a Phillips catalyst is used, it is possible to obtain an ethylene-based polymer having excellent moldability.

The Ziegler catalyst may be a catalyst that is generally known as a Ziegler catalyst for use in coordination polymerization, and examples thereof include catalysts containing a titanium compound and an organoaluminum compound, which include catalysts made from a halogenated titanium compound and an organoaluminum compound, and catalysts made from a solid catalyst component composed of, for example, titanium, magnesium and chlorine, and an organoaluminum compound.

Examples of the catalyst include catalysts made from a catalyst component (a) obtained by reacting a titanium compound with a reaction product of an anhydrous magnesium dihalide pretreated with alcohol and an organometallic compound, and an organometallic compound (b), catalysts made from a catalyst component (A) obtained by reacting magnesium metal and a hydroxylated organic compound, or an oxygen-containing organic compound of, for example, magnesium, an oxygen-containing organic compound of transition metal, and an aluminum halide, and a catalyst component (B) as an organometallic compound, and catalysts made from a solid catalyst component (A) obtained by reacting a reaction product obtained by reacting (i) at least one member selected from metal magnesium and a hydroxylated organic compound, an oxygen-containing organic compound of magnesium, and a halogen-containing compound, (ii) at least one member selected from an oxygen-containing organic compound of transition metal and a halogen-containing compound, and (iii) a silicon compound, and (iv) a halogenated aluminum compound, and a catalyst component (B) as an organometallic compound.

The Phillips catalyst has been heretofore known, and examples thereof include catalyst systems containing a chromium compound such as chromium oxide, specifically, catalysts in which a chromium compound such as chromium trioxide or a chromic acid ester is supported on a solid oxide such as silica, alumina, silica-alumina or silica-titania.

The monomer forming an ethylene-based polymer for use in the present invention may include a biomass-derived monomer (ethylene, and optionally an α-olefin). The monomer forming an ethylene-based polymer may be composed only of a biomass-derived monomer, or may include both a biomass-derived monomer and a fossil foil-derived monomer.

The biomass-derived monomer is a monomer made from any of general renewable natural raw materials derived from, for example, plants or animals including fungi, yeast, algae and bacteria, and residues thereof, contains a ¹⁴C isotope as carbon in a proportion of about 10⁻¹², and has a biomass carbon concentration (pMC) of typically about 100 (pMC) as measured according to ASTM D6866.

The biomass-derived monomer can be obtained by a heretofore known method.

It is preferable that the ethylene-based polymer for use in the present invention contain a biomass-derived monomer from the viewpoint of reduction of burden on the environment (mainly greenhouse gas mitigation). Even when the raw material monomer includes a biomass-derived monomer, an ethylene-based polymer similar in molecular structure to that made from a fossil fuel-derived monomer except that a ¹⁴C isotope is contained in a proportion of about 10⁻¹² to 10⁻¹⁴ is obtained as long as the polymer production conditions such as polymerization catalysts and polymerization temperatures in the polymerization process are the same. Therefore, there is no difference in performance.

The monomer forming an ethylene-based polymer for use in the present invention may include a chemical recycling-derived monomer (ethylene, and optionally an α-olefin). The monomer forming an ethylene-based polymer may be composed only of a chemical recycling-derived monomer, or may include a chemical recycling-derived monomer and a fossil fuel-derived monomer and/or a biomass-derived monomer.

The chemical recycling-derived monomer can be obtained by a heretofore known method. It is preferable that the ethylene-based polymer for use in the present invention contain a chemical recycling-derived monomer from the viewpoint of reduction of burden on the environmental (mainly waste reduction). The chemical recycling-derived monomer is a monomer obtained by recovering monomer units such as ethylene from a polymer such as waste plastic by depolymerization or thermal decomposition, or a monomer produced using the above-described monomer as a raw material, and therefore, even when the raw material monomer includes the chemical recycling-derived monomer, an ethylene-based polymer similar in molecular structure to that made from a fossil fuel-derived monomer is obtained as long as the polymer production conditions such as polymerization catalysts, polymerization processes and polymerization temperatures are the same. Therefore, there is no difference in performance.

The molecular weight distribution of the ethylene-based polymer is not limited. Preferably, the molecular weight distribution (ratio of weight-average molecular weight: Mw and number-average molecular weight: Mn, represented by Mw/Mn) is as follows.

Molecular weight distribution (Mw/Mn) of ethylene-based polymer (A1) and ethylene-based polymer (A4):
preferably 2 to 15, more preferably 2 to 12, still more preferably 2 to 9, and further more preferably 2 to 7. A molecular weight distribution within such a range ensures an excellent balance of transparency and moldability.

Molecular weight distribution (Mw/Mn) of ethylene-based polymer (A2) and ethylene-based polymer (A3):
preferably 2 or more, more preferably 4 or more, still more preferably 10 or more, further more preferably 20 or more, even more preferably 30 or more, particularly preferably 35 or more. A molecular weight distribution within such a range enables the obtainment of a stretched film having excellent tear strength.

Molecular weight distribution (Mw/Mn) of ethylene-based polymer (B):
preferably 2 or more and less than 100. A molecular weight distribution within such a range ensures an excellent balance of strength and moldability.

The molecular weight distribution (Mw/Mn) can be measured by gel permeation chromatography (GPC), more specifically, by a method described in Examples of the present application, for example.

The polyethylene-based polymers may be used singly, or used in combination of two or more thereof. The polyethylene-based polymer may be used together with other polymers including other ethylene-based polymers.

The ethylene-based polymer may contain, if needed, at least one of various additives that are added to common polyolefin-based resin compositions, for example, a weathering stabilizer, a heat stabilizer, an antistatic agent, an antifogging agent, an anti-blocking agent, a slipping agent, a lubricant, a pigment, an antisticking agent and a nucleating agent as long as the object of the present invention is not impaired.

The layers will be described below.

### [Layer (a1)]

The layer (a1) contains the ethylene-based polymer (A1) as a main component.

The ethylene-based polymer (A1) has an MFR (190°C, 2.16 kg load) of 0.5 g/10 min or more and 10 g/10 min or less.

The lower limit is preferably 0.55 g/10 min or more, more preferably 0.6 g/10 min or more, and still more preferably 0.8 g/10 min or more.

The upper limit is preferably 8 g/10 min or less, more preferably 7 g/10 min or less, still more preferably 6 g/10 min or less, and further more preferably 3 g/10 min or less.

When the MFR of the ethylene-based polymer (A1) is within such a range, transparency and extrudability are obtained.

The density is 940 kg/m³ or more. The density is preferably 941 kg/m³ or more, more preferably 942 kg/m³ or more, and still more preferably 946 kg/m³ or more. The upper limit is typically 970 kg/m³ or less, preferably 969 kg/m³ or less, and more preferably 962 kg/m³ or less.

When the density is within the above-described range, appropriate stiffness and strength are obtained.

The density is a value determined according to JIS K7112 (density-gradient tube method).

### [Layer (a2)]

The layer (a2) contains the ethylene-based polymer (A2) as a main component.

The ethylene-based polymer (A2) has an MFR (190°C, 2.16 kg load) of 0.01 g/10 min or more and less than 0.5 g/10 min. The lower limit is preferably 0.025 g/10 min or more, and more preferably 0.06 g/10 min or more.

The upper limit is preferably 0.45 g/10 min or less, more preferably 0.40 g/10 min or less, and still more preferably 0.35 g/10 min or less.

When the MFR of the ethylene-based polymer (A2) is within such a range, appropriate strength and extrudability are obtained.

The density is 940 kg/m³ or more. The density is preferably 941 kg/m³ or more, more preferably 942 kg/m³ or more, and still more preferably 946 kg/m³ or more. The upper limit is typically 970 kg/m³ or less, preferably 969 kg/m³ or less, more preferably 968 kg/m³ or less, and still more preferably 962 kg/m³ or less.

When the density is within the above-described range, appropriate stiffness and strength are obtained.

The density is a value determined according to JIS K7112 (density-gradient tube method).

### [Layer (b)]

The layer (b) contains the ethylene-based polymer (B) as a main component.

The ethylene-based polymer (B) has an MFR (190°C, 2.16 kg load) of 0.01 g/10 min or more and less than 50 g/10 min. The lower limit is preferably 0.1 g/10 min or more, more preferably 0.2 g/10 min or more, still more preferably 0.3 g/10 min or more, and further more preferably 0.5 g/10 min or more.

The upper limit is preferably 30 g/10 min or less, more preferably 20 g/10 min or less, still more preferably 12 g/10 min or less, further more preferably 5 g/10 min or less, even more preferably 3 g/10 min or less, and particularly preferably 2.5 g/10 min or less.

When the MFR of the ethylene-based polymer (B) is within such a range, appropriate strength and extrudability are obtained.

The density is less than 940 kg/m³. The density is preferably 935 kg/m³ or less, more preferably 930 kg/m³ or less, still more preferably 925 kg/m³ or less, further more preferably 920 kg/m³ or less, even more preferably 915 kg/m³ or less, and particularly preferably 910 kg/m³ or less.

The lower limit is typically 880 kg/m³ or more, preferably 885 kg/m³ or more, more preferably 890 kg/m³ or more, still more preferably 895 kg/m³ or more, and further more preferably 900 kg/m³ or more.

When the density is within the above-described range, appropriate stiffness and strength are obtained.

The density is a value determined according to JIS K7112 (density-gradient tube method).

### [Layer (a3)]

The layer (a3) contains the ethylene-based polymer (A3) as a main component.

The ethylene-based polymer (A3) has an MFR (190°C, 2.16 kg load) of 0.015 g/10 min or more and less than 0.5 g/10 min. The lower limit is preferably 0.025 g/10 min or more, and more preferably 0.06 g/10 min or more.

The upper limit is preferably 0.45 g/10 min or less.

When the MFR of the ethylene-based polymer (A3) is within such a range, appropriate strength and extrudability are obtained.

The density is 940 kg/m³ or more. The density is preferably 941 kg/m³ or more, more preferably 942 kg/m³ or more, and still more preferably 946 kg/m³ or more. The upper limit is typically 970 kg/m³ or less, preferably 969 kg/m³ or less, more preferably 968 kg/m³ or less, and still more preferably 962 kg/m³ or less.

When the density is within the above-described range, appropriate stiffness and strength are obtained.

The density is a value determined according to JIS K7112 (density-gradient tube method).

### [Layer (a4)]

The layer (a4) contains the ethylene-based polymer (A4) as a main component.

The ethylene-based polymer (A4) has an MFR (190°C, 2.16 kg load) of 0.5 g/10 min or more and 10 g/10 min or less.

The lower limit is preferably 0.55 g/10 min or more, more preferably 0.6 g/10 min or more, and still more preferably 0.8 or more.

The upper limit is preferably 8 g/10 min or less, more preferably 7 g/10 min or less, still more preferably 6 g/10 min or less, and further more preferably 3 g/10 min or less.

When the MFR of the ethylene-based polymer (A4) is within such a range, transparency and extrudability are obtained.

The density is 940 kg/m³ or more. The density is preferably 941 kg/m³ or more, more preferably 942 kg/m³ or more, and still more preferably 946 kg/m³ or more. The upper limit is typically 970 kg/m³ or less, preferably 969 kg/m³ or less, and more preferably 962 kg/m³ or less.

When the density is within the above-described range, appropriate stiffness and strength are obtained.

The density is a value determined according to JIS K7112 (density-gradient tube method).

### [Multilayer stretched film]

The multilayer stretched film of the present invention comprises, in the following order, five layers including:
a layer (a1) containing an ethylene-based polymer (A1) as a main component,
a layer (a2) containing an ethylene-based polymer (A2) as a main component,
a layer (b) containing an ethylene-based polymer (B) as a main component,
a layer (a3) containing an ethylene-based polymer (A3) as a main component, and
a layer (a4) containing an ethylene-based polymer (A4) as a main component.

The average density of the multilayer stretched film is 931 kg/m³ or more and 948 kg/m³ or less.

The lower limit is preferably 935 kg/m³ or more, more preferably 936 kg/m³ or more, and still more preferably 937 kg/m³ or more. The upper limit is preferably 946 kg/m³ or less, and more preferably 944 kg/m³ or less.

When the average density is in such a range, occurrence of sagging can be prevented, so that it is possible to obtain a multilayer stretched film having an excellent appearance.

In each of the layers, the proportion of the ethylene-based polymer as a main component is preferably 90 mass% or more.

In the multilayer stretched film of the present invention, the polymer compositions of the layer (a1) and the layer (a4) may be the same, and similarly, the polymer compositions of the layer (a2) and the layer (a3) may be the same.

The formulations of additives including a stabilizer in the layers may be the same or different.

The thickness of the multilayer stretched film of the present invention is typically 5 µm or more and 1,500 µm or less. The lower limit is preferably 6 µm or more, and more preferably 8 µm or more. The upper limit is preferably 1,000 µm or less, more preferably 200 µm or less, and still more preferably 80 µm or less.

When the thickness of the multilayer stretched film is 5 µm or more, it is possible to maintain an appropriate strength corresponding to a relevant application.

When the thickness of the multilayer stretched film is 200 µm or less, the film is suitable for various applications of packaging materials, and is easily handled when used for a substrate in a relevant application.

The thickness of each of the layers in the multilayer stretched film of the present invention is typically 0.3 µm or more and 150 µm or less, but is changed according to an application of the multilayer stretched film, and a required function.

In addition, the ratio of the thicknesses of the layers (thickness ratio of layer (a1) : layer (a2) : layer (b) : layer (a3) : layer (a4)) is typically 0.02 to 5 : 0.04 to 5 : 0.04 to 5 : 0.04 to 5 : 0.02 to 5, preferably 0.04 to 5 : 0.1 to 5 : 0.1 to 5 : 0.1 to 5 : 0.04 to 5.

Since the ratio of the thicknesses of the layers is within the above-described range, the balance of stiffness, strength and heat resistance is improved.

Among the multilayer stretched films of the present invention, excellent multilayer stretched films can be obtained which have particularly excellent performance in which preferably, the glossiness is 30% or more, in particular, 35% or more, or even 40% or more.

Excellent multilayer stretched films can also be obtained in which the elastic modulus (machine direction) is 2,000 MPa or more, in particular, 2,200 MPa or more, or even 2,500 MPa or more.

Excellent multilayer stretched films can also be obtained in which the tear strength (machine direction) is 0.5 N or more, in particular, 1.0 N or more, or even 2.0 N or more, in particular, 2.5 N or more.

The multilayer stretched film of the present invention is produced by various methods, and a method is typically used in which stretching is performed during or after formation of a film by melt coextrusion molding.

For film formation by melt coextrusion, a known method such as a T-die method or an inflation method is utilized. Inter alia, a five-layered film (non-oriented) is formed by melt coextrusion, and then stretched to form the multilayer stretched film of the present invention.

The method of stretching is not limited, and include both uniaxial stretching and biaxial stretching.

As the uniaxial stretching, a method is exemplified in which in a roll stretching machine, the film is preheated with a preheating roll, and then uniaxially stretched in the machine direction (take-up direction) using a difference in rotation speed between two or more rolls. From the viewpoint of enhancing the production efficiency, it is preferable that an original to be stretched be uniaxially stretched in the machine direction immediately after being preheated. In the uniaxial stretching, stretching in a uniaxial direction is performed, but concomitantly, slight stretching in a direction different from the uniaxial direction may occur. This is because depending on stretching equipment used, stretching in a uniaxial direction may be substantially accompanied by stretching in a direction different from the uniaxial direction.

As biaxial stretching, for example, sequential biaxial stretching, simultaneous biaxial stretching, and multistage stretching are exemplified. Examples thereof include a method comprising simultaneous or sequential biaxial stretching in longitudinal and lateral methods by a tenter method, and a method comprising simultaneous biaxial stretching in longitudinal and lateral directions by a tubular method.

An annealing treatment may be performed as necessary on the stretched film. The annealing treatment can be performed by, for example, bringing a stretched sheet into contact with a heating roll.

The stretch ratio is typically 1.5 or more, preferably 2 or more, and more preferably 2.5 or more in at least one direction. The upper limit of the stretch ratio is not particularly limited, but is preferably less than 20, more preferably less than 18, and still more preferably less than 6.

When the stretch ratio is within the above-described range, stiffness and strength are obtained.

The stretching temperature is adjusted to an appropriate temperature according to, for example, a melting point of the ethylene copolymer in each layer of the multilayer stretched film, a stretch ratio, and a stretching rate. In the case of multistage stretching, for example, sequential biaxial stretching, the stretching temperature is set so as to rise sequentially. The stretching temperature is typically in a range of 70°C to 130°C.

The elastic modulus of the multilayer stretched film of the present invention in the machine direction (take-up direction) is preferably 1,600 MPa or more, more preferably 1,700 MPa or more, and still more preferably 2,000 MPa or more. The upper limit of the elastic modulus is typically 8,000 MPa or less. The multilayer stretched film has sufficient stiffness required in its wide applications.

The multilayer stretched film of the present invention is used in various applications. For example, the multilayer stretched film is used as substrates and stiffness modifying layers of packaging materials.

### [Laminate]

A laminate of the present invention comprises a layer including the multilayer stretched film of the present invention. In an aspect, the laminate of the present invention may comprise a plurality of layers including the multilayer stretched film of the present invention.

The multilayer stretched film of the present invention is preferably used as a substrate in the laminate.

As other layers in the laminate of the present invention, for example, other plastic films, metal foils such as an aluminum foil, paper, and cellulose are exemplified.

By laminating the multilayer stretched film of the present invention and other layers to form a laminate, various functions can be further imparted. For example, coextrusion with a barrier resin (for example, EVOH or Ny) and an adhesive resin (for example, ADMER), or application to the surface layer (for example, a vapor deposited film) may be performed.

The vapor deposited film may be composed of a metal or may be composed of an inorganic oxide. Examples of the metal that forms a metal vapor deposited film include aluminum, chromium, tin, nickel, copper, silver, gold, and platinum. Examples of the metal oxide include aluminum oxide, silicon oxide, magnesium oxide, calcium oxide, zirconium oxide, titanium oxide, boron oxide, hafnium oxide, and barium oxide.

As the plastic film, plastic films of thermoplastic resins such as polyolefins such as crystalline polypropylene, crystalline propylene-ethylene copolymer, crystalline polybutene-1, crystalline poly 4-methylpentene-1, ethylenevinyl acetate copolymers (EVAs), ethylene-ethyl acrylate copolymers (EEAs) and ionically cross-linked olefin copolymers (ionomers), polyamides such as nylon 6 and nylon 66, polyesters such as polyethylene terephthalate (PET) and polytetramethylene terephthalate, and polyacetals such as various kinds of polycarbonate are exemplified.

For producing the laminate of the present invention which comprises the multilayer stretched film of the present invention as a substrate and the other layers, an adhesive and an anchoring agent can be interposed between the layers if necessary. In addition, the whole or a part of the surface is coated with, for example, a metal oxide by vapor deposition, or provided with an ink layer.

The method for laminating the substrate layer and another layer is not limited, and examples thereof include a method comprising direct lamination by, for example, extrusion lamination, ozone treatment comprising treatment in an oxidizing atmosphere (for example, a gas containing oxygen, in particular, ozone (for example, air)), and a method comprising lamination with an adhesive by dry lamination.

The thickness of the laminate is typically about 8 µm to 2,000 µm.

The thickness of the other layer is typically 3 to 1,000 µm. The lower limit of the thickness of the other layer is preferably 4 µm or more, and more preferably 6 µm or more. The upper limit is preferably 600 µm or less, and more preferably 500 µm or less.

The laminate of the present invention is widely used in various applications, and is particularly suitable for packaging materials.

### [Packaging material]

A packaging material of the present invention comprises the multilayer stretched film of the present invention. Inter alia, for example, a packaging material comprising the laminate of the present invention is suitable for applications in which various products and components are packaged. Such a packaging material can be produced by, for example, superposing the laminates of the present invention such that the edge portions of at least a part of the laminates contact each other, followed by heat-sealing for integration.

The packaging material of the present invention is used for a wide range of applications, for example, packaging of various produces and components such as commodities, machine components, electric components, food products, beverages and pharmaceutical products.

### Examples

The present invention will now be described by way of Examples below, but the present invention is not limited by the Examples.

### [Measurement methods]

In the following Examples, the physical properties of raw materials or films were measured as follows.

### <Glossiness [unit: %]>

Measurement was performed by a method specified in JIS Z 8741.

### <Elastic modulus [unit: MPa]>

A dumbbell having a size in accordance with JIS K6781 was blanked from the film in a take-up direction (MD) of a film and used as a specimen.

The specimen was set up in air chucks of a universal tester with MD being a pulling direction, and subjected to a tensile test with a chuck distance set to 80 mm and a pulling rate set to 200 mm/min. The slope of the initial stress to the displacement was taken as the elastic modulus.

### <Tear strength [unit: N]>

A cut was made on the specimen in the take-up direction (MD) of the film, and the Elmendorf tear strength was measured in accordance with JIS K7128-2 using an Elmendorf tear tester of Toyo Seiki Seisaku-sho, Ltd.

### <Piercing strength [unit: N]>

A force needed to pierce a test piece with a jig having a point diameter of 1/4 inches, which passes through the test piece at a test speed of 200 mm/min.

### <Sagging>

The flatness of the film was evaluated on the basis of the following criteria.

Evaluation criteria O: Sagging becomes unnoticeable when the multilayer stretched film is gently pressed.

X: The multilayer stretched film is sagging, and sagging remains even when the film is gently pressed.

### [Raw materials]

The following raw materials were used in the Examples.
3300F: Ethylene-based polymer
   (trade name: HI-ZEX (registered trademark) 3300F (manufactured by Prime Polymer Co., Ltd.), MFR: 1.1 g/10 min, density: 949 kg/m³)
3600F: Ethylene-based polymer
   (trade name: HI-ZEX (registered trademark) 3600F (manufactured by Prime Polymer Co., Ltd.), MFR: 1.0 g/10 min, density: 958 kg/m³)
SP0510: Ethylene-based polymer
   (trade name: EVOLUE (registered trademark) SP0510 (manufactured by Prime Polymer Co., Ltd.), MFR: 1.3 g/10 minutes, density: 904 kg/m³)

### [Production Example 1]

3300F and SP0510 were melt-kneaded in a ratio of 50 mass% and 50 mass% with an extruder at 200°C to obtain an ethylene-based polymer composition (hereinafter, referred to as "composition c3").

### [Example 1 and Comparative Examples 1 to 6]

### (Production of multilayer unstretched film)

Coextrusion molding was performed on a layer constitution shown in Table 1, thereby obtaining a multilayer unstretched film having a thickness of 125 µm.

### (Production of stretched film)

The obtained unstretched film was uniaxially stretched with a heating roll in a machine direction (MD) at a stretch ratio of 5 at a stretching temperature shown in Table 1, thereby obtaining a uniaxially stretched film having a thickness of 25 µm. The elastic modulus, tear strength and heat shrinkage ratio of the obtained stretched film were measured. The measurement results are shown in Table 1.

### [Table 1]

**Table 1**

| Item | | Unit | Example 1 | Comparative Example 1 | Comparative Example 2 | Comparative Example 3 | Comparative Example 4 | Comparative Example 5 | Comparative Example 6 |
|---|---|---|---|---|---|---|---|---|---|
| Molding method | | | Stretching | Stretching | Stretching | Stretching | Stretching | Stretching | Stretching |
| Layer | | | Multilayer | Multilayer | Multilayer | Multilayer | Multilayer | Multilayer | Multilayer |
| Layer (a1) | Raw material | - | 3600F | 3600F | GE100 | 3300F | GE100 | Composition c3 | GE200 |
| | MFR | g/10 min | 1.0 | 1.0 | 0.1 | 1.0 | 0.1 | 1.1 | 0.2 |
| | Density | kg/m³ | 958 | 958 | 954 | 949 | 954 | 938 | 952 |
| Layer (a2) | Raw material | - | GE100 | 3600F | GE100 | 3300F | GE100 | Composition c3 | GE200 |
| | MFR | g/10 min | 0.1 | 1.0 | 0.10 | 1.0 | 0.1 | 1.1 | 0.2 |
| | Density | kg/m³ | 954 | 958 | 954 | 949 | 954 | 938 | 952 |
| Layer (b) | Raw material | - | SP0510 | SP0510 | SP0510 | 3300F | GE100 | Composition c3 | SP0510 |
| | MFR | g/10 min | 1.2 | 1.2 | 1.2 | 1.0 | 0.10 | 1.1 | 1.2 |
| | Density | kg/m³ | 904 | 904 | 904 | 949 | 954 | 938 | 904 |
| Layer (a3) | Raw material | - | GE100 | 3600F | GE100 | 3300F | GE100 | Composition c3 | GE200 |
| | MFR | g/10 min | 0.1 | 1.0 | 0.1 | 1.0 | 0.1 | 1.1 | 0.2 |
| | Density | kg/m³ | 954 | 958 | 954 | 949 | 954 | 938 | 952 |
| Layer (a4) | Raw material | - | 3600F | 3600F | GE100 | 3300F | GE100 | Composition c3 | GE200 |
| | MFR | g/10 min | 1.0 | 1.0 | 0.1 | 1.0 | 0.1 | 1.1 | 0.2 |
| | Density | kg/m³ | 958 | 958 | 954 | 949 | 954 | 938 | 952 |
| Layer ratio | | - | 1/3/3/3/1 | 1/1/2/1/1 | 1/1/2/1/1 | 1/1/1/1/1 | 1/1/1/1/1 | 1/1/1/1/1 | 1/1/2/1/1 |
| Average density (all layers) | | kg/m³ | 942 | 939 | 936 | 949 | 954 | 938 | 936 |
| | | | | | | | | | |
| Stretching temperature | | °C | 120 | 118 | 115 | 120 | 120 | 80 | 126 |
| Stretch ratio | | times | 5 | 5 | 5 | 5 | 5 | 5 | 5 |
| | | | | | | | | | |
| Film physical property | Film thickness | µm | 25 | 25 | 25 | 25 | 25 | 25 | 25 |
| | Glossiness | % | 65 | 24 | 16 | 58 | 10 | 48 | 26 |
| | Elastic modulus (machine direction) | MPa | 3100 | 4403 | 3545 | 3647 | 4390 | 1739 | 2397 |
| | Tear strength (machine direction) | N | 4 | 0.5 | 7.7 | 0.1 | 1.8 | 1.6 | 5.9 |
| | Shrinkage ratio at 120°C (machine direction) | g | 14 | 10 | 16 | 18 | 9.8 | 48 | 19 |
| | Piercing strength | N | 28 | 22 | 27 | less than 10 | 28 | 31 | 31 |
| | Sagging | - | ○ | ○ | ○ | × | × | ○ | ○ |

## Claims

1. A multilayer stretched film comprising, in the following order,
a layer (a1) containing, as a main component, an ethylene-based polymer (A1) having a melt flow rate (MFR, 190°C, 2.16 kg load) of 0.5 g/10 min or more and 10 g/10 min or less as measured according to JIS K 7210, and a density of 940 kg/m³ or more as measured according to JIS K7112,
a layer (a2) containing, as a main component, an ethylene-based polymer (A2) having a melt flow rate (MFR, 190°C, 2.16 kg load) of 0.01 g/10 min or more and less than 0.5 g/10 min as measured according to JIS K 7210, and a density of 940 kg/m³ or more as measured according to JIS K7112,
a layer (b) containing, as a main component, an ethylene-based polymer (B) having a melt flow rate (MFR, 190°C, 2.16 kg load) of 0.01 g/10 min or more and less than 50 g/10 min as measured according to JIS K 7210, and a density of lower than 940 kg/m³ as measured according to JIS K7112,
a layer (a3) containing, as a main component, an ethylene-based polymer (A3) having a melt flow rate (MFR, 190°C, 2.16 kg load) of 0.01 g/10 min or more and less than 0.5 g/10 min as measured according to JIS K 7210, and a density of 940 kg/m³ or more as measured according to JIS K7112, and
a layer (a4) containing, as a main component, an ethylene-based polymer (A4) having a melt flow rate (MFR, 190°C, 2.16 kg load) of 0.5 g/10 min or more and 10 g/10 min or less as measured according to JIS K 7210, and a density of 940 kg/m³ or more as measured according to JIS K7112,
wherein an average density is 931 kg/m³ or more and 948 kg/m³ or less.

2. The multilayer stretched film according to claim 1, which has a stretch ratio of 2 or more.

3. The multilayer stretched film according to claim 1, which has a thickness of 5 µm to 1,000 µm.

4. The multilayer stretched film according to claim 1, which has a glossiness of 30% or more, an elastic modulus (machine direction) of 2,000 MP or more, and a tear strength (machine direction) of more than 0.5 N.

5. A laminate comprising a multilayer stretched film according to claim 1.

6. A packaging material comprising the laminate according to claim 5.

7. A method for producing the multilayer stretched film according to any one of claims 1 to 4, comprising performing stretching during or after formation of an original film by melt coextrusion molding.
